# EUROPEAN PATENT APPLICATION

(11) **EP 3 770 831 A1**
(43) Date of publication of application: **27.01.2021**
(21) Application number: 19187737.2
(22) Date of filing: 23.07.2019
(51) Int. Cl.: G06Q 10/06, G06Q 10/10

(54) **A SYSTEM FOR INCREASING AN OPERATION EFFICIENCY OF AN INDUSTRIAL FACILITY**

(71) Applicant: Siemens Aktiengesellschaft, 80333 München (DE)
(72) Inventor: Boemmel, Sebastian, 90461 Nürnberg (DE); Herrmann, Marko, 91056 Erlangen (DE)

(57) **Abstract**

A system (1) for increasing an operation efficiency of an industrial facility (2) comprising assets (3), wherein asset related key performance indicator, KPI, data are supplied to a server implemented maintenance application, MAPP, adapted to combine the received KPI data using a data combination model, DCM, to generate linked KPI data processed to trigger automatically at least one maintenance activity, MA, with respect to affected assets (3) of said industrial facility (2).

## Description

The invention relates to a method and system for increasing an operation efficiency of an industrial facility comprising a plurality of assets including hardware components such as motors or converters.

Industrial facilities comprising a plurality of assets can be managed using a cloud platform. There is a wide variety of different tools providing assistance in the operation of an industrial facility. These tools can assist in the management of single assets but also of complete fleets of assets. These tools can allow monitoring of maintenance activities and to provide transparency with respect to installed components or required spare parts. Further tools can provide analytical functions, in particular detection and identification of operation failures of components installed in the industrial facility. Some tools allow an automated ordering of required spare parts. Accordingly, there is a wide variety of heterogeneous tools providing assistance in the operation and management of complex industrial facilities. Users employ different applications and tools for triggering planning maintenance activities, execution and documenting maintenance activities. For instance, a maintenance management tool such as COMOS MRO can be used to plan maintenance activities according to predefined maintenance intervals. Condition-based data of the assets are not used by this maintenance tool. Identification and ordering of required spare parts for the scheduling of service operators are not performed by this tool but has to be performed separately in a non-automated manner. In contrast, another maintenance tool used for maintenance management (such as ABB Ability) has access to condition data of the industrial facility but is not able to transform this information into configuring or planning maintenance activities directly since necessary information data for maintenance activities are not available, in particular information concerning spare parts or service levels. Further tools are used to manage the storage of spare parts and components to replace assets of an industrial facility and to optimize an inventory level of the storage. However, the inventory information of such a warehouse management tool is in most cases not available to other tools such as the maintenance manager used to plan and schedule the maintenance of the industrial facility. The provision of so many heterogeneous tools and data source used for planning, executing and maintaining an industrial facility has a strong negative impact on the operation efficiency of the industrial facility.

Accordingly, it is an object of the present invention to provide a method and system for increasing the operation efficiency of an industrial facility.

This object is achieved according to a first aspect of the present invention by a system comprising the features of claim 1.

The invention provides according to the first aspect a system for increasing an operation efficiency of an industrial facility comprising assets,
wherein asset related key performance indicator, KPI, data are supplied to a server implemented maintenance application adapted to combine the received KPI data using a data combination model to generate linked KPI data processed to trigger automatically at least one maintenance activity with respect to affected assets of said industrial facility.

The advantage of the system according to the present invention is that the productivity of an industrial facility can be increased due to optimized maintenance cycles. Further, the transparency and scheduling of upcoming maintenance tasks can be improved significantly. The system further provides full transparency on historical maintenance activities and plant key performance indicators. The system according to the present invention allows to optimize assets of the industrial facility and to manage required spare parts and components of the industrial facility efficiently. By optimizing the maintenance activities, the production downtimes of the industrial facility can be reduced. Consequently, the productivity of an industrial facility or plant is increased.

The key performance indicator data can comprise any data which can have an impact on the efficiency or performance of the industrial facility. The KPI data can comprise sensor data or data derived from sensor data generated by sensors installed in the industrial facility or data read from data memories.

In a possible embodiment of the system according to the first aspect of the present invention, the assets of the industrial facility are on-boarded to a cloud platform of said system.

The on-boarding can include a registration of the assets at the cloud platform of the system. A customer can onboard or register new assets of the industrial facility so that they are taken into account when optimizing the operation efficiency of the industrial facility comprising the on-boarded assets.

In a further possible embodiment of the system according to the first aspect of the present invention, the maintenance application is executed by a backend server of the cloud platform of the system.

This has the advantage that the maintenance application can be executed in a protected environment on a central server which can be used by different customers running different industrial facilities.

In a further possible embodiment of the system according to the first aspect of the present invention, each asset comprises an associated asset identifier used to identify the respective asset. This asset identifier can comprise an article number and/or a serial number of the respective asset. This has the advantage that already existing article numbers or serial numbers can be used to identify assets unambiguously for optimizing the operation efficiency of the industrial facility.

In a possible embodiment of the system according to the first aspect of the present invention, the assets of the industrial facility comprise hardware components and/or software components installed in said industrial facility.

In a further possible embodiment of the system according to the first aspect of the present invention, the maintenance activity comprises a field service performed by an operator for the affected assets.

Accordingly, field service maintenance operations can be integrated to increase the operation efficiency of the industrial facility.

In a further possible embodiment of the system according to the first aspect of the present invention, the maintenance activity comprises a provision of spare parts for the affected assets.

Accordingly, the inventory level of a warehouse stock of these spare parts can be considered for the optimization of the operation efficiency of the industrial facility.

In a further possible embodiment of the system according to the first aspect of the present invention, the maintenance activity comprises a maintenance recommendation concerning the affected assets.

In a further possible embodiment of the system according to the first aspect of the present invention, the maintenance activity comprises a predictive maintenance activity triggered automatically for an upcoming time and/or for an upcoming time period.

This has the advantage that the operation downtimes of the industrial facility can be minimized.

In a further possible embodiment of the system according to the first aspect of the present invention, the KPI data are provided by heterogeneous data sources providing static and/or dynamic KPI data related to assets of the industrial facility in heterogeneous data formats.

Accordingly, a wide variety of different heterogeneous data sources can be integrated into the system according to the first aspect of the present invention so that the system can integrate a wide variety of already existing software tools for different life cycles stages of the industrial facility.

In a further possible embodiment of the system according to the first aspect of the present invention, the maintenance application is adapted to convert data formats of the KPI data provided by the heterogeneous data sources into a common internal data format used to combine the KPI data received from the heterogeneous data sources for generation of the linked KPI data.

This has the advantage that processing of the data originating from the different heterogeneous data sources is optimized and can be performed rapidly requiring minimal data processing resources.

In a further possible embodiment of the system according to the first aspect of the present invention, the heterogeneous data sources comprise internal data sources which supply asset related KPI data via data interfaces to the maintenance application run on a backend server of a cloud platform of said system. These internal data sources can comprise sensor assets installed in the industrial facility. Accordingly, the system can use real-time data provided by sensor assets installed in the operating industrial facility to optimize the operation efficiency of the industrial facility.

In a further possible embodiment of the system according to the first aspect of the present invention, the heterogeneous data sources comprise external data sources, digital twins and/or simulation programs, which supply asset related KPI data via data interfaces to the maintenance application run on a backend server of a cloud platform of said system. These heterogeneous external data sources can comprise external databases.

This has the advantage that the system according to the present invention can have access to a huge number of different data sources providing information about the industrial facility.

In a further possible embodiment of the system according to the first aspect of the present invention, the maintenance application is adapted to combine the KPI data received from heterogeneous data sources based on configured or generated logic combination rules of a rule-based data combination model.

KPI data combination rules of the data combination model can be configured individually for specific industrial facilities of different customers to meet targets set by the customer running the industrial facility.

The KPI data combination rules can also be derived at least partially from a graphical representation of assets of the industrial facility.
In a further possible embodiment of the system according to the first aspect of the present invention, the data combination model comprises a trained artificial intelligence model implemented in an artificial intelligence module of the cloud platform of the system.

This has the advantage that programming efforts for generating a source code can be reduced and the data combination model can be adapted in a more automated manner.

In a further possible embodiment of the system according to the first aspect of the present invention, the linked KPI data and/or the triggered maintenance activities are output via a display of a user interface to assist a maintenance manager in monitoring and/or planning the maintenance of said industrial facility.

This increases the transparency of the system to a maintenance manager.

The invention provides according to a further aspect a computer-implemented method comprising the features of claim 16.

The invention provides according to the second aspect a computer-implemented method for increasing an operation efficiency of an industrial facility comprising the steps of: providing key performance indicator, KPI, data related to assets of the industrial facility,
combining the key performance indicator, KPI, data on the basis of a data combination model to generate linked KPI data and
processing the linked KPI data to trigger automatically at least one maintenance activity with respect to affected assets of the industrial system.

In the following, possible embodiments of the different aspects of the present invention are described in more detail.
- FIG 1: shows a diagram for illustrating a possible exemplary embodiment of a system for increasing an operation efficiency of an industrial facility according to the present invention;
- FIG 2: shows a further schematic diagram for illustrating the operation of a system according to the present invention;
- FIG 3: shows a flowchart for illustrating a possible exemplary embodiment of a computer-implemented method according to a further aspect of the present invention.

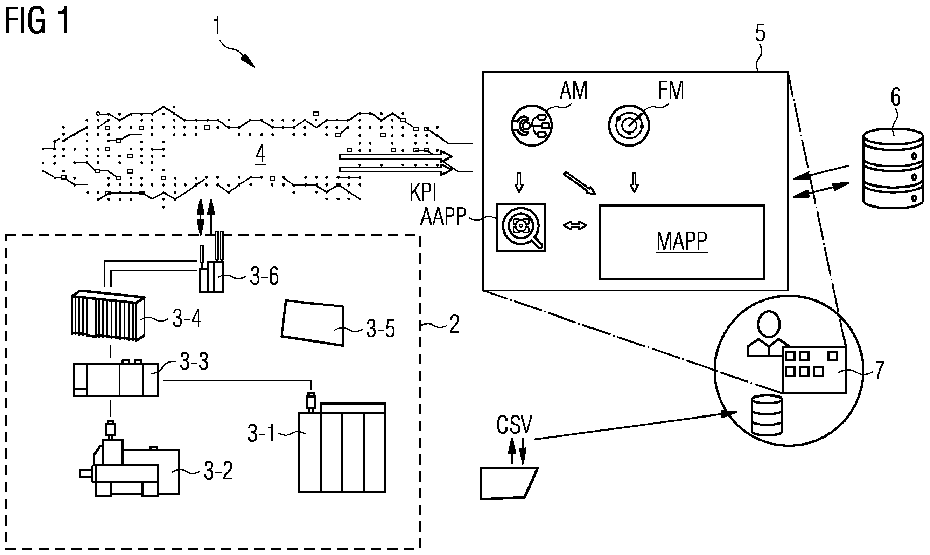

FIG 1 illustrates a system infrastructure of a possible exemplary embodiment of a system 1 according to the present invention used for increasing an operation efficiency of an industrial facility 2. The industrial facility 2 can comprise a plurality of different assets including mostly hardware components or machines operated in an industrial process. The industrial facility 2 can be located at a customer site. The assets 3 of the industrial facility 2 can comprise motors with motor bearings and other components such as converters. Different assets 3 can be connected to each other via data and/or control lines or control buses. In the illustrated simple example of FIG 1, the industrial facility 2 can comprise different assets 3 connected to each other to exchange data. At least some of the assets 3 can provide or generate asset related data, in particular asset related key performance indicator, KPI, data being relevant for the evaluation of a performance of the industrial facility 2. Key performance indicator, KPI, data can comprise sensor data generated by sensor assets 3 of the industrial facility 2. Further, a key performance indicator KPI can be derived by processing sensor data or by combining sensor data logically with each other. Key performance indicator, KPI, data can for instance reflect the temperature or humidity within a factory building of the industrial facility 2. Key performance indicator data can also comprise operational data of different assets, in particular machines such as vibration data of a bearing of a motor. For instance, a bearing damage can be a result of applied mechanical stress. A root cause for such a bearing damage can be one of a group of failure modes including imbalance, a soft root, misalignment or a bearing fault. These different failure types can be identified in the motors mechanical signature, i.e. vibration spectrum. Continuous vibration measurement by a sensor asset of the industrial facility 2 can provide KPI data related to the operation of the motor asset or bearing. Further, machine learning ML can be used for automated failure pattern recognition to indicate failures and to predict root causes. Further, KPI data can relate to the magnetic field of the electro motor and its windings.

KPI data can be provided by heterogeneous data sources providing static and/or dynamic KPI data related to different assets 3 of the industrial facility 2 in heterogeneous data formats. Heterogeneous data sources can comprise internal data sources to supply asset related KPI data via data interfaces to a maintenance application MAPP run on a backend server 5 of a cloud platform 4 of the system 1. The heterogeneous internal data sources can in particular comprise sensor assets installed in the industrial facility 2 and/or local memories of the different assets providing KPI data to the maintenance application MAPP. Heterogeneous data sources can further comprise external data sources, in particular external databases, digital twins and/or simulation programs which supply further asset related KPI data via data interfaces to the maintenance application MAPP run on the backend server 5 of the cloud platform 4 of the system 1. For the example illustrated in FIG 1, the industrial facility 2 can comprise an interface asset such as a router kid 3-6 transferring data to a cloud platform 4 of the system 1 having a backend server 5. The asset related key performance indicator data are supplied to a server implemented maintenance application executed by the backend server 5. The maintenance application MAPP is adapted to combine the received KPI data using a data combination model DCM to generate linked KPI data processed by a processor of the backend server 5 to trigger automatically at least one maintenance activity MA with respect to affected assets 3 of the industrial facility 2. The triggered maintenance activity MA can comprise a field service performed by an operator for the affected assets 3. Further, the triggered maintenance activity MA can comprise an automated provision of spare parts for the affected assets 3. The maintenance activity MA can further comprise maintenance recommendations concerning affected assets of the industrial facility 2.

The maintenance activity MA can comprise in a possible embodiment a predictive maintenance activity which is triggered automatically for an upcoming time and/or for an upcoming time period. Besides the maintenance application MAPP, the backend server 5 can be operated to execute other applications such as an asset manager AM, a fleet manager FM, analytical applications AAPP using data stored in a portal or database 6 of the system 1.

Each asset 3 of the industrial facility 2 can be identified by a unique associated asset identifier, in particular an article number and/or a serial number of the asset stored in the database 6.

A launchpad 7 of a user in the field can be linked to the backend server 5 of the system 1 as shown in FIG 1. The database 6 can comprise a variety of different information about the industrial facility 2 and about components installed in the industrial facility 2. The stored data can comprise spares on web (SoW) data about installed spare parts. The information can also comprise information about available spare parts at the customer site, i.e. at the location of the industrial facility 2. The data further can comprise MLFB-data or nameplate data used to identify machines and/or components installed in the industrial facility 2. Other data can be related to the topology and structure of the industrial facility 2. The database 6 can also store digital twin data models of components installed in the industrial facility 2. Further, asset related data describing specific assets 3 and components installed in specific industrial facilities 2 at different customer sites can be stored in the database 6. Further, the database 6 can store data models which can be used by the backend server 5 of the system 1. The backend server 5 can load in a possible embodiment at least one data combination model DCM which can be used to combine received KPI data of an industrial facility 2. In a possible embodiment, the data combination model DCM can be a configurable rule based data combination model DCM adapted to generate linked KPI data processed by the maintenance application MAPP to calculate results which can be used to trigger automatically one or more maintenance activities MA with respect to affected assets 3 of the respective industrial facility 2. The triggered maintenance activities MA can comprise a field service performed by the user U receiving corresponding instructions from the backend server 5 on his user terminal or launchpad 7. Further, the triggered maintenance activity MA can order automatically required spare parts of the affected assets of the industrial facility 2.

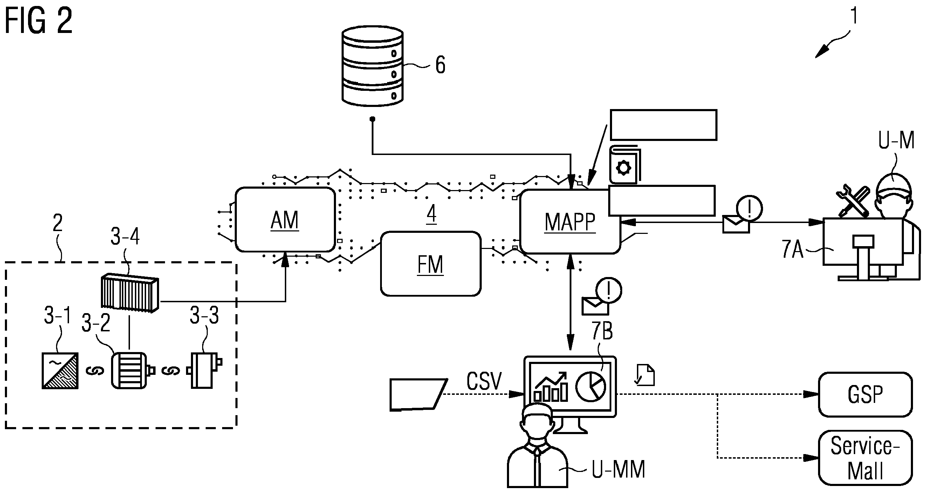

FIG 2 shows a further diagram for illustrating the operation of a system 1 according to the present invention.

One or more industrial facilities 2 can be connected via a cloud platform 4 to a backend server 5 running several applications including an asset manager AM, a fleet manager FM, analytical applications AAPPs and a maintenance application MAPP. An operator U-M can be connected by means of a user terminal 7A to the cloud platform 4 to provide customer field services and for handling the maintenance M. Another user such as a maintenance manager MM can be connected by another terminal 7B to the cloud platform 4. The maintenance manager U-MM can plan the maintenance of the industrial facility 2. The maintenance manager U-MM may get information about customers' spare parts availability from an SAP system via CSV import. The maintenance application MAPP can provide maintenance recommendations to define interval and operating hours and transmit the recommendations to the terminal 7A of the operator U-M handling the maintenance activity MA of the industrial facility 2. A maintenance application MAPP can for instance calculate operation hours of the industrial facility 2 on the basis of the received KPI data to trigger automatically an inspection of the industrial facility 2 if the calculated operation hours exceed a predefined threshold. A maintenance recommendation can define which kind of maintenance and/or repair has to be performed by a service technician at the customer site of the industrial facility 2. Parallel to this activity, the maintenance manager U-MM can request field services and/or order necessary spare parts to perform the maintenance activities MA at the industrial facility 2. A maintenance activity MA can be triggered directly by the backend server 5 in response to the processed linked KPI data and/or indirectly by a maintenance manager U-MM and/or customer field service operator in response to electronic messages generated by the maintenance application MAPP run on the backend server 5.

Maintenance activities MA can be triggered condition-based on the basis of the linked key performance indicator data according to a rule-based data combination model. The maintenance activity MA can be triggered as follows:

| **Maintenance activity** | Category | Periodical | | Interval | | | | |
|---|---|---|---|---|---|---|---|---|
| | [Scheduled, Measured, On Demand] | [one-time/periodic] | Trigger Minimum | Mini-mum | Minimum unit Oh = Opera-ting hours | Trigger Maximum | Maximum | Maximum unit |
| **First inspection** | Scheduled | one-time | 350 | 500Oh | | 0.25 | 0.5 | a |
| **Main inspection** | Scheduled | periodic | 14000 | 16000Oh | | 1.75 | 2 | a |
| **Bearing replacement (horizontal and radial forces at ambient temperature 40°C)** | Scheduled | periodic | 38000 | 40000Oh | | - | - | |
| **Bearing replacement (axial and radial forces at ambient temperature 40°C)** | Scheduled | periodic | 18000 | 20000Oh | | - | - | |
| **Re-greasing** | On Demand | | | | | | | |
| **Cleaning the grease ducts and spent grease chambers** | On Demand | | | | | | | |
| **Cleaning the cooling air ducts** | On Demand | | | | | | | |
| **Drain condensate** | On Demand | | | | | | | |
| **Servicing the external fan** | On Demand | | | | | | | |
| **Servicing the external fan motor** | On Demand | | | | | | | |
| **Replacing fan (type FX)** | Scheduled | periodic | 46000 | 50000Oh | | - | - | |
| **Overtemperature** | Measured | one-time | | 40°C | | | | |
| **Undertemperature** | Measured | one-time | | | | | | 0°C |
| **High relative humidity** | Measured | one-time | | | | | | 50% |
| | | | | 100000 | | | | |
| **Isolation fault** | Measured | one-time | | 0Ω | | | | |

An exemplary rule-based data combination model can be defined as follows:

```
 1 OHeff = Current operating hours - Last execution
 operating hours
 2 DAYeff = today - last execution date
 3
 4 // interval min unit Oh - interval max unit h/a:
 5 if OHeff >= interval min
 6 Due Date = today
 7 // (Consider also Due Date in else condition! It could
 be smaller!)
 8 else Due Date = today + (interval max - DAYeff)
 9
 10 if OHeff >= interval min then Due Date = Today
 11 else Due Date = (trigger interval min - OHeff)
 12
 13 // interval min unit h/a - interval max unit Oh:
 14 if OHeff >= interval max then Due Date = Today
 15 // (Consider also Due Date in else condition! It could be
 smaller!)
 16 else Due Date = today + (interval min - DAYeff)
 17
```

The data combination model DCM used to generate linked KPI data can be rule-based as illustrated above including if-then-else relationships. Logic combination rules of the data combination model DCM can be configurable by means of a user interface UI of an asset manager AM of the system 1. The linked KPI data and/or the triggered maintenance activities MA can be output in a possible embodiment via a display of a user interface UI to assist a maintenance manager U-MM in monitoring and/or planning the maintenance of the industrial facility 2. The maintenance application MAPP can use different data combination models DCMs to combine received KPI data. These data combination models DCMs can comprise rule-based data combination models DCMs as illustrated above but also other kinds of data combination models DCMs including trained artificial intelligence models which can be implemented in an artificial intelligence module of the backend server 5. The artificial intelligence model can be trained in a machine learning process on the basis of training data derived from preprocessed KPI data received from the industrial facility 2 or a central training data repository of the system 1.

The DCM can comprise a graphical representation of assets 3 of the industrial facility 2, e.g. assets represented by nodes connected via edges representing relations between the assets (e.g. "is part of").

The DCM can be displayed on a display to a maintenance manager and be edited for reconfiguration of the DCM.

The database 6 can comprise a repository of preconfigured DCMs which can be used to link different types of KPI data and which may be adapted by the maintenance manager to the specific use case or facility 2.

In a possible embodiment, relations between assets 3 expressed by edges in a graphical representation are processed to generate automatically rules of the data combination model DCM used for combining key performance indicator, KPI, data originating from data sources of associated assets 3. For example, if a first asset forms part (relation) of a second asset, the KPI data of both assets may be aggregated into a common data stream of KPI data or the KPI data of the first asset may alternatively be blocked or filtered because the KPI data of the second asset is deemed to reflect also the condition of the integrated first asset forming part of the second asset. Accordingly, a rule-based DCM can comprise KPI-linking rules derived automatically from a knowledge graph of the industrial facility 2 including nodes representing assets 3 and edges representing relations between assets 3. Rules of the DCM can comprise also commands to generate specific electronic messages or data packets of a specific format if certain conditions indicated by received KPI data are fulfilled. For example, a message to a preferred target address is generated if KPI data from one or more predefined assets 3 indicate a certain operation behaviour or fault condition of the respective assets 3.

The received KPI data can comprise continuous KPI data streams but also event-driven KPI data, transported in messages and/or data packets. A combination of KPI data using a data combination model DCM can take place on different levels. KPI data can be combined at a logical level using logical combination rules (e.g. Boolean rules) but also on a physical level using a common time grid. In a possible embodiment, the KPI data received from the industrial facility 2 can be time-stamped or different data sources can be synchronized with each other to provide KPI data in a predefined time grid so that timing relationships between the received KPI data can be exploited by the rule-based data combination model DCM. The data combination model DCM can combine both static and dynamic data originating from static and dynamic data sources. Static KPI data include for instance data which can be scanned from nameplates attached to machines of the industrial facility 2. A further example for a static KPI data can comprise product development data or product information data. Dynamic data can comprise operation data generated by controllers installed in the industrial facility 2 or condition data provided by a condition monitoring system of the industrial facility 2. Further, dynamic data can be generated by simulation program tools simulating components of the industrial facility 2, for instance by using digital twin models. Different kinds of static and/or dynamic data can be combined with each other using associated data combinations models DCM to provide linked KPI data processed to trigger automatically at least one maintenance activity MA.

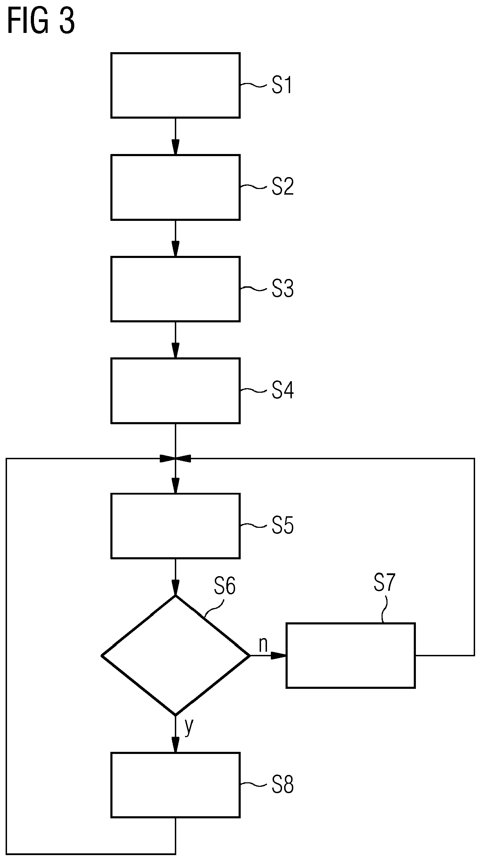

FIG 3 shows a flow chart of a possible exemplary embodiment of a computer-implemented method according to the present invention.

In a first step S1, assets 3 of the industrial facility 2 can be onboarded to the cloud platform 4 by the customer. The assets 3 can be identified by associated unique asset identifiers. For instance, SIMOTICS 1LE1, 1LE5 can identify motor assets 3 of the industrial facility 2. SINAMICS G150, S120 identify converter assets 3 of the industrial facility 2.

In a further step S2, asset related data related to the on-boarded assets 3 (i-base) are collected via data interfaces. The asset related data can be loaded from data sources of the industrial facility 2 and from a plurality of different databases 6 or repositories linked to the backend server 5 of the cloud platform 4.

In an optional step S3, the customer can assign a criticality factor for the different assets 3 of his industrial facility 2. A criticality factor CF can indicate the importance of the respective asset 3 for successful operation of the industrial facility 2. The DCM can be configured to process the criticality factors CFs assigned to different assets 3.

In a further step S4, the maintenance application MAPP can combine data from steps S2, S3 with service information from a service application database. The service application database can comprise additional service information for maintenance recommendations and a data model for failure analytics, in particular to calculate a remaining useful life RUL for the different assets 3.

In a further step S5, the maintenance application MAPP can determine and display upcoming maintenance activities, required service personnel and necessary spare parts.

In a further step S6, it can be determined whether all needed resources are available. In case that not all needed resources are available, the maintenance application MAPP can order automatically in step S7 necessary spare parts and can request a field service to be performed by an operator of the affected assets 3. In case that all resources are available, the maintenance application MAPP can trigger the maintenance activities MA with respect to the affected assets 3 of the industrial facility 2 in step S8.

As can be seen from the flowchart of FIG 3, the computer-implemented method for increasing the operation efficiency of an industrial facility 2 comprises the following main steps. Key performance indicator, KPI, data related to assets of the industrial facility 2, i.e. onboarded assets, are provided. In a further main step, the key performance indicator, KPI, data is combined automatically on the basis of predefined data combination models DCMs to generate linked KPI data. The linking can be performed on a physical and/or logical level. The linked KPI data is then processed to trigger automatically at least one maintenance activity MA with respect to affected assets 3 of the industrial facility 2. The heterogeneous data sources providing the KPI data can comprise internal and/or external data sources providing asset related data in different data formats. In a possible embodiment, the maintenance application MAPP run on the backend server 5 is adapted to convert different data formats of the KPI data or asset related data provided by the heterogeneous data sources into a common internal data format which is used to combine the KPI data received from the heterogeneous data sources according to the data combination model DCM for generation of the linked KPI data. In this embodiment, the data combination model DCM is applied to a common internal representation of KPI data used by the maintenance application.

The system 1 according to the present invention can increase the productivity of the industrial facility 2 due to optimized maintenance cycles. Further, the maintenance efficiency is increased due to digital maintenance assistance. The system 1 further improves transparency and scheduling of upcoming maintenance tasks. This allows for a simple and lean documentation of maintenance activities as well as for full transparency on historical maintenance activities and plant KPI data. The system 1 further allows easy registration of existing and newly bought spare parts for components installed in the industrial facility 2. It achieves full transparency on spare parts stock and consumption and mitigates the risks by easy identification of spare stock gaps. With the system 1 according to the present invention, a lean spare part ordering process can be implemented to provide asset optimization. The present invention makes it possible to integrate a wide variety of already existing software tools into an integrated maintenance system 1 thus increasing the operation efficiency of the industrial facility 2. The present invention allows to integrate existing maintenance managers, condition monitoring systems (e.g. Siemens SM1282, ABB Ability), asset optimization services (such as AOS), spare part information systems (such as spares on web SoW), service ticket systems (e.g. SIROT, Assist, GSP), life cycle information systems (e.g. Smart Service Scheduler), inventory management systems (such as SAP), analytic systems (e.g. Auguri) and ordering systems (such as Service Mall) into a common integrated maintenance system 1. This maintenance system 1 can be used for conventional maintenance and repair services but also for predictive maintenance activities. The computer-implemented system according to the present invention is not restricted to the embodiments illustrated in the above diagrams but can be used for a wide variety use cases within the scope of the invention as defined by the main claims.

## Claims

1. A system (1) for increasing an operation efficiency of an industrial facility (2) comprising assets (3),
wherein asset related key performance indicator, KPI, data are supplied to a server implemented maintenance application, MAPP, adapted to combine the received KPI data using a data combination model, DCM, to generate linked KPI data processed to trigger automatically at least one maintenance activity, MA, with respect to affected assets (3) of said industrial facility (2).

2. The system according to claim 1,
wherein the assets (3) of the industrial facility (2) are on-boarded to a cloud platform (4) of said system (1).

3. The system according to claim 1 or 2
wherein the maintenance application, MAPP, is executed by a backend server (5) of the cloud platform (4) of said system (1).

4. The system according to any of the preceding claims 1 to 3,
wherein each asset (3) comprises an associated asset identifier, in particular an article number and/or a serial number, used to identify the respective asset (3).

5. The system according to claim 1,
wherein the assets (3) comprise hardware components and/or software components installed in said industrial facility (2).

6. The system according to any of the preceding claims 1 to 3,
wherein the maintenance activity, MA, comprises
a field service performed by an operator for the affected assets and/or
a provision of spare parts for the affected assets and/or a maintenance recommendation concerning the affected assets.

7. The system according to any of the preceding claims 1 to 6,
wherein the maintenance activity, MA, comprises a predictive maintenance activity triggered automatically for an upcoming time and/or for an upcoming time period.

8. The system according to any of the preceding claims 1 to 7,
wherein the KPI data are provided by heterogeneous data sources providing static and/or dynamic KPI data related to assets (3) of said industrial facility (2) in heterogeneous data formats.

9. The system according to claim 8,
wherein the maintenance application, MAPP, is adapted to convert data formats of the KPI data provided by the heterogeneous data sources into a common internal data format used to combine the KPI data received from the heterogeneous data sources for generation of the linked KPI data.

10. The system according to claim 8 or 9,
wherein the heterogeneous data sources comprise internal data sources, in particular sensor assets installed in the industrial facility (2), which supply asset related KPI data via data interfaces to the maintenance application, MAPP, run on a backend server (5) of a cloud platform (4) of said system (1).

11. The system according to claim 8 or 9,
wherein the heterogeneous data sources comprise external data sources, in particular external databases, digital twins and/or simulation programs, which supply asset related KPI data via data interfaces to the maintenance application, MAPP, run on a backend server (5) of a cloud platform (4) of said system (1).

12. The system according to any of the preceding claims 1 to 11,
wherein the maintenance application, MAPP, is adapted to combine the KPI data received from heterogeneous data sources based on configured or generated combination rules of a rule based data combination model, DCM.

13. The system according to claim 12,
wherein the logic combination rules of the data combination model, DCM, are configurable by means of a user interface of an asset manager (AM) of said system (1).

14. The system according to any of the preceding claims 1 to 13,
wherein the data combination model, DCM, comprises a trained artificial intelligence model implemented in an artificial intelligence module of the cloud platform (4) of said system (1).

15. The system according to any of the preceding claims 1 to 14,
wherein the linked KPI data and/or the triggered maintenance activities, MAs, are output via a display of a user interface to assist a maintenance manager in monitoring and/or planning the maintenance of said industrial facility (2).

16. A computer-implemented method for increasing an operation efficiency of an industrial facility (2) comprising the steps of:
- providing key performance indicator, KPI, data related to assets (3) of said industrial facility (2);
- combining the key performance indicator, KPI, data on the basis of a data combination model, DCM, to generate linked KPI data; and
- processing the linked KPI data to trigger automatically at least one maintenance activity, MA, with respect to affected assets (3) of said industrial facility (2).
